# EUROPEAN PATENT SPECIFICATION

(11) **EP 1 879 209 B1**
(45) Date of publication and mention of the grant of the patent: **16.03.2011**
(21) Application number: 07717682.4
(22) Date of filing: 30.03.2007
(51) Int. Cl.: H01J 11/02, H01J 17/16, H01J 17/18

(54) **PLASMA DISPLAY PANEL**
PLASMAANZEIGETAFEL
ECRAN A PLASMA

(30) Priority: 31.03.2006 JP 2006098876
(43) Date of publication of application: 16.01.2008
(73) Proprietor: Panasonic Corporation, Kadoma-shi Osaka 571-8501 (JP)
(72) Inventor: MIYAZAKI, Akinobu c/o Matsushita Electric Industrial Co., Ltd., Chuo-ku, Osaka-shi, Osaka 540-6319 (JP); NISHIMURA, Masaki c/o Matsushita Electric Industrial Co., Ltd., Chuo-ku, Osaka-shi, Osaka 540-6319 (JP); NISHINAKA, Masaki c/o Matsushita Electric Industrial Co., Ltd., Chuo-ku, Osaka-shi, Osaka 540-6319 (JP)
(74) Representative: Pautex Schneider, Nicole Véronique
(86) International application number: PCT/JP2007/057038
(87) International publication number: WO 2007/114321

(56) References cited:
- JP-A- 2000 277 014
- JP-A- 2000 277 014
- JP-A- 2002 260 537
- JP-A- 2002 265 237
- JP-A- 2004 238 273
- JP-A- 2004 238 273
- JP-A- 2005 213 103
- JP-A- 2005 292 329
- JP-A- 2005 314 136
- JP-A- 2006 018 319

## Description

### TECHNICAL FIELD

The present invention relates to a plasma display panel according to the preamble of claim 1.

### BACKGROUND ART

A plasma display panel (hereinafter, PDP) includes a front panel and a rear panel oppositely disposed to each other and sealed at their periphery with a sealing member. The front panel and the rear panel have discharge spaces therebetween filled with a discharge gas including neon (Ne) and xenon (Xe).

The front panel includes a glass substrate; display electrodes consisting of scan electrodes and sustain electrodes arranged in a stripe pattern on the glass substrate; a dielectric layer coating the display electrodes; and a protective layer coating the dielectric layer. The display electrodes each consist of a transparent electrode and a metal bus electrode formed thereon.

The rear panel, on the other hand, includes a glass substrate; address electrodes arranged in a stripe pattern on the glass substrate; a dielectric layer coating the address electrodes; barrier ribs formed on the dielectric layer to partition the discharge spaces; and phosphor layers of red, green, and blue. The phosphor layers are formed on the dielectric layer between the barrier ribs and also on side surfaces of the barrier ribs.

The front panel and the rear panel are oppositely disposed to each other so that the display electrodes and the address electrodes can cross each other and have discharge cells at their intersections.

The discharge cells are arranged in a matrix. In the matrix, three adjacent discharge cells having red, green, and blue phosphor layers, respectively, are arranged in the direction of the display electrodes so as to form a pixel for color display.

In a PDP, a predetermined voltage is applied between the scan electrodes and the address electrodes, and another predetermined voltage is applied between the scan electrodes and the sustain electrodes so as to generate gas discharge. The gas discharge generates ultraviolet light which excites the phosphor layers, allowing them to emit light so as to display color images.

In general, the discharge gas to be sealed in a PDP has a pressure of about 66.7 kPa (500 Torr), which is lower than the atmospheric pressure. This causes a compressive force to be applied in the direction in which the front panel and the rear panel are compressed to each other with the barrier ribs therebetween. However, in a place with a low atmospheric pressure, the compressive force between the front panel and the rear panel is reduced, so that the PDP is swollen and deformed. Therefore, when a voltage pulse is applied to the address electrodes or the display electrodes to illuminate the PDP, the piezoelectric effect of the dielectric layer causes vibration, which causes the dielectric layer and the barrier ribs to repeatedly collide with each other. As a result, noise having an audible frequency of 10 kHz is generated.

In order to overcome this problem, it has been proposed that the sealing portion where the front and rear panels are sealed at their periphery has a larger thickness than the image display area in such a manner that the center portion of the image display area is depressed (refer to Patent Document 1 below, for example).

However, if the sealing portion has a larger thickness than the image display area, the peripheral portion of the image display area has a "gap", thereby causing crosstalk between the top of the barrier ribs and the dielectric layer. The term "crosstalk" refers to a phenomenon that discharge cells adjacent to a discharge cell that is being discharged become difficult to be illuminated. This phenomenon is caused when substances called priming particles (charged particles), which are generated by discharge, fly to the adjacent discharge cells through the "gap" and makes the discharge cells difficult to be discharged. Thus, crosstalk causes lighting failure, and the prevention of crosstalk requires increasing the voltage to be applied to the address electrodes and the like.

Documents JP 2004-139921, JP 2000-277014, JP 2004-238273 and EP 1496025 describe PDPs of the above mentioned type.

### SUMMARY OF THE INVENTION

The present invention relates to a PDP according to claim 1.

This structure realizes a PDP which causes neither crosstalk in the peripheral portion of the image display area nor noise in a place having a low atmospheric pressure.

### BRIEF DESCRIPTION OF THE DRAWINGS

Fig. 1 is a perspective view showing a structure of a PDP according to an embodiment of the present invention.
Fig. 2 is a plan view showing a structure of a rear panel and a structure of a sealing portion of the PDP according to the embodiment of the present invention.
Fig. 3A is a sectional view showing an essential part of the PDP according to the embodiment of the present invention.
Fig. 3B is a sectional view showing an essential part of the PDP when a seal layer in a sealing portion is sealed in a shrunk state.
Fig. 4 is a graph showing an effect of the thickness of a glass substrate of the PDP according to the embodiment of the present invention.

### REFERENCE MARKS IN THE DRAWINGS

- 1: PDP
- 2: front panel
- 3: front glass substrate
- 4: scan electrode
- 4a, 5a: transparent electrode
- 4b, 5b: bus electrode
- 5: sustain electrode
- 6: display electrode
- 7: dielectric layer
- 8: protective layer
- 9: rear panel
- 10: rear glass substrate
- 11: address electrode
- 12: underlying dielectric layer
- 13: barrier rib
- 14R, 14G, 14B: phosphor layer
- 15: discharge space
- 16: discharge cell
- 17: image display area
- 18: sealing portion
- 19: seal layer
- 20: contact area

### DETAILED DESCRIPTION OF PREFERRED EMBODIMENT

A PDP of an embodiment of the present invention is described as follows with reference to drawings.

### EMBODIMENT

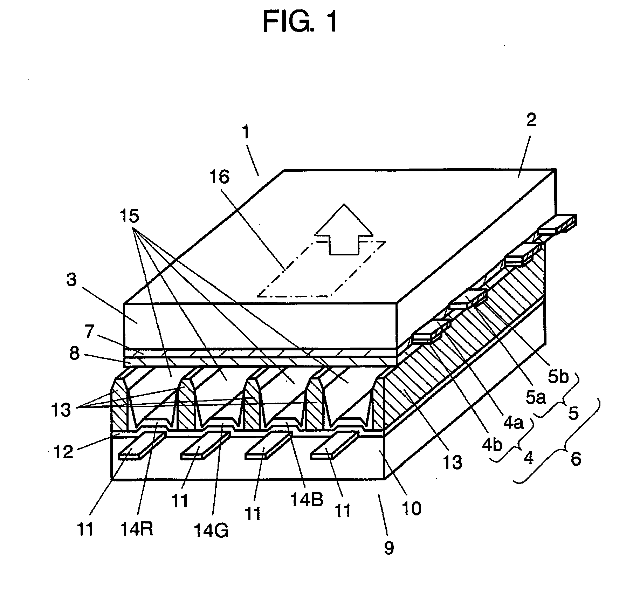

Fig. 1 is a perspective view showing a structure of the PDP according to the embodiment of the present invention. PDP 1 has front panel 2 and rear panel 9. Front panel 2 includes insulating front glass substrate 3 and display electrodes 6 which are formed thereon and consist of scan electrodes 4 and sustain electrodes 5. Front glass substrate 3 is made, for example, of high strain-point float glass having a thickness of 0.5 mm or more and 2.0 mm or less. Display electrodes 6 are coated with dielectric layer 7, which is further coated with protective layer 8 of MgO. Each scan electrode 4 consists of transparent electrode 4a and bus electrode 4b, and each sustain electrode 5 consists of transparent electrode 5a and bus electrode 5b. Transparent electrodes 4a and 5a are discharge electrodes. Bus electrodes 4b and 5b are made of Cr-Cu-Cr or Ag and electrically connected to transparent electrodes 4a and 5a, respectively.

Rear panel 9, on the other hand, includes insulating rear glass substrate 10 having a thickness of 0.5 mm or more and 2.0 mm or less, address electrodes 11 formed thereon, and underlying dielectric layer 12 formed further thereon in such a manner as to coat address electrodes 11. There are also provided barrier ribs 13 formed at positions on underlying dielectric layer 12, the positions corresponding to between address electrodes 11. There are further provided phosphor layers 14R, 14G and 14B, which emit light of red, green and blue on underlying dielectric layer 12 and on the side surfaces of barrier ribs 13.

Front panel 2 and rear panel 9 are oppositely disposed to each other with barrier ribs 13 therebetween so that display electrodes 6 and address electrodes 11 can cross each other and have discharge spaces 15 therebetween. Discharge spaces 15 are filled with a rare gas containing at least one of helium, neon, argon, and xenon as a discharge gas. Discharge spaces 15, which are formed at the intersections of address electrodes 11 and scan and sustain electrodes 4, 5 and are partitioned by barrier ribs 13, operate as discharge cells 16.

In other words, applying a voltage to address electrodes 11 and another voltage to display electrodes 6 allows specific discharge cells 16 to generate discharge, and the generated discharge produces ultraviolet light and applies it to phosphor layers 14R, 14G and 14B. Phosphor layers 14R, 14G and 14B convert the ultraviolet light into visible light, so that image display is performed in the arrow direction.

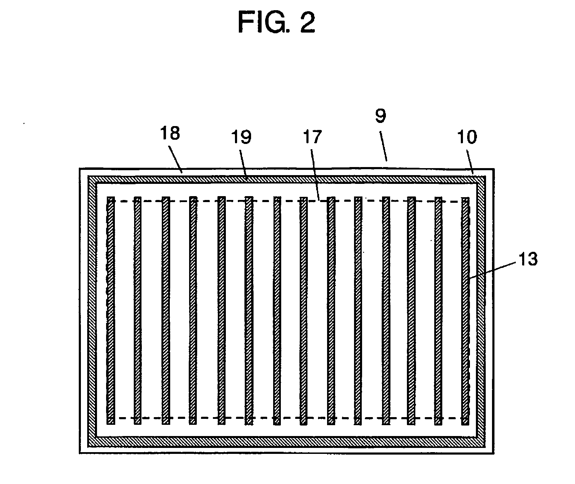

Fig. 2 is a plan view showing a structure of rear panel 9 and a structure of a sealing portion of PDP 1 according to the embodiment of the present invention. Front panel 2 (unillustrated) and rear panel 9 of PDP 1 are bonded to each other via seal layer 19 formed in sealing portion 18 outside image display area 17, which is enclosed by a dotted line in Fig. 2.

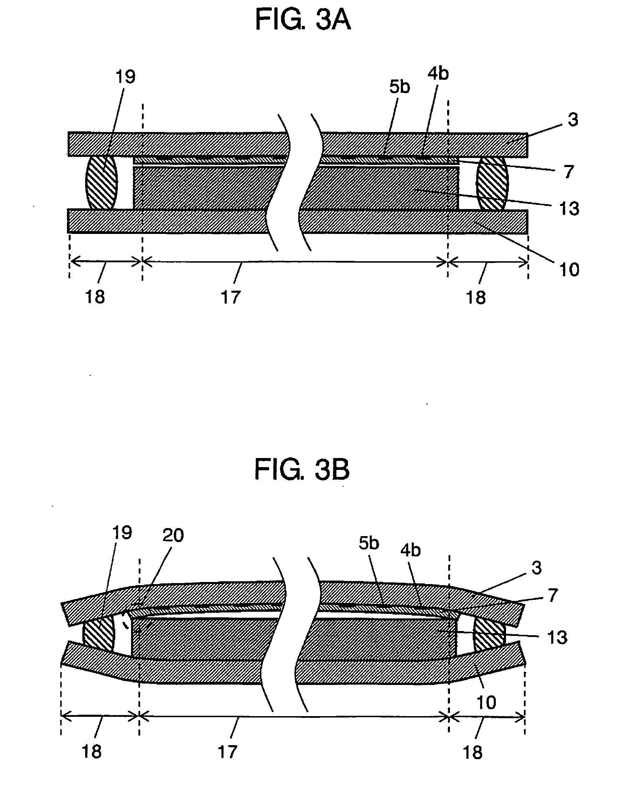

Fig. 3A is a sectional view showing an essential part of PDP according to the embodiment of the present invention and corresponding to the short side of PDP 1 shown in Fig. 2. As shown in Fig. 2, the sealing is performed in such a manner that the surface of dielectric layer 7 on front panel 2 and the top of barrier ribs 13 on rear panel 9 can be parallel to each other.

This step (hereinafter, sealing step) is described in detail as follows. A paste containing a sealing material made of a low-melting-point glass material is applied as seal layer 19 to sealing portion 18 of at least one of front panel 2 and rear panel 9. Then, front panel 2 and rear panel 9 are aligned with each other and heated while being fixed by a compressive force of a clip. The temperature of the heating is referred to as a sealing temperature. When heated to the sealing temperature, the sealing material is melted. The melted sealing material of seal layer 19 allows front panel 2 and rear panel 9 to be sealed to each other, thereby completing the sealing step.

After this, discharge spaces 15 are evacuated to a high vacuum (evacuated and baked) while heated, and then a discharge gas is sealed therein at a predetermined pressure so as to complete PDP 1.

In the sealing step, the sealing material of seal layer 19 is once melted by heating. At this moment, seal layer 19 of PDP 1 may have variations in thickness because of variations in the application of the compressive force due to variations in the relative position between the clip and barrier ribs 13 and also because of the shrinkage of the sealing material of seal layer 19.

Fig. 3B is a sectional view of the short side of PDP 1 showing its essential part when seal layer 19 in sealing portion 18 is sealed in a shrunk state. In this case, front panel 2 and rear panel 9 have a shorter distance therebetween in the peripheral portion of image display area 17 and in sealing portion 18 than in the remaining area, so that the center portion of image display area 17 is swollen. As a result, dielectric layer 7 or protective layer 8 (unillustrated) of front panel 2 and barrier ribs 13 have contact areas 20 therebetween in and around the boundary of image display area 17 and sealing portion 18.

If an AC voltage pulse is applied to address electrodes 11 or display electrodes 6 when PDP 1 has such a shape, noise is generated. The noise is probably caused as a result that the piezoelectric effect of dielectric layer 7, underlying dielectric layer 12 or the like causes vibration, and the vibration causes dielectric layer 7 and barrier ribs 13 to repeatedly collide with each other. The noise has a frequency of 10 kHz or so, which is in the range of human audibility.

In general, the discharge gas to be sealed in PDP 1 has a pressure of about 66.7 kPa (500 Torr), which is lower than the atmospheric pressure. This causes a compressive force to be applied in the direction in which front panel 2 and rear panel 9 are compressed to each other with barrier ribs 13 therebetween, thereby preventing the occurrence of noise. However, in a place with a low atmospheric pressure, the compressive force between front panel 2 and rear panel 9 is reduced, so that PDP 1 is swollen and deformed. This can easily cause noise. Thus, in a place with a low atmospheric pressure, the noise problem is more significant.

In order to overcome this problem, it has been proposed that sealing portion 18 where front and rear panels 2 and 9 are sealed at their periphery has a larger thickness than image display area 17 in such a manner that the center portion of image display area 17 is depressed.

However, if seal layer 19 has a large thickness, the peripheral portion of image display area 17 has a "gap" between the top of barrier ribs 13 and dielectric layer 7. The "gap" causes crosstalk and hence lighting failure, and the prevention of crosstalk requires increasing the address voltage.

The sealing material used in seal layer 19 of PDP 1 according to the embodiment of the present invention is substantially made of a glass composition. The glass composition is a mixture of low-melting-point glass and a low coefficient-of-expansion filler and may contain a pigment and the like. The low coefficient-of-expansion filler can be made of any material that does not react with or adversely affect PDP 1. However, in terms of chemical stability, cost, and safety, the low coefficient-of-expansion filler of the present invention is made of cordierite

The low-melting-point glass is Bi₂O₃-based containing at least one of MgO, ZnO, B₂O₃, SiO₂, CeO, CaO, SrO, BaO, In₂O₃, Li₂O, Na₂O, K₂O, Cl, and F.

In the mixture of the low-melting-point glass and the low coefficient-of-expansion filler, the content of the low-melting-point glass in the total weight of the mixture is in the range of 50 to 99 parts by weight, and the content of the low coefficient-of-expansion filler in the total weight of the mixture is in the range of 1 to 50 parts by weight. When the low-melting-point glass exceeds 99 parts by weight, the low coefficient-of-expansion filler is so small that the coefficient of thermal expansion of the sintered sealing material becomes too large. Consequently, there is a difference in the coefficient of thermal expansion between the sealing material and the glass substrate to be sealed, so that the glass substrate is susceptible to breakage. On the other hand, when the low-melting-point glass is less than 60 parts by weight, the glass component is too small to maintain the fluidity of the sealing material, thereby reducing the air-tightness of sealing portion 18.

After sintered, the sealing material preferably has an average coefficient of thermal expansion of 65 × 10⁻⁷ to 90 × 10⁻⁷/°C in the range of room temperature to 250°C. When the average coefficient of thermal expansion is outside this range, it becomes difficult to match the coefficient of thermal expansion between the sealing material and the glass substrate to be sealed, thereby making the glass substrate susceptible to breakage.

The glass composition is generally used in powder form, and is mixed with a binder, a solvent, and the like to form a sealing material paste. The sealing material paste is applied on the glass substrate and sintered to form seal layer 19. Alternatively, the sealing material paste may be formed into a compact used for sealing so as to form seal layer 19.

In terms of chemical stability, cost, and safety, a glass paste composition, which is the sealing material paste, is preferably made of resin such as a cellulose derivative, polyvinyl alcohol, polyvinyl butyral, polyethylene glycol, urethane resin, acrylic resin, or melamine resin. Examples of the cellulose derivative include nitrocellulose, methylcellulose, ethyl cellulose, and carboxymethylcellulose. Preferable examples of the solvent contained in the glass paste composition, which is the sealing material paste, include the following in terms of chemical stability, cost, and safety and also in terms of compatibility with the resin such as a cellulose derivative, polyvinyl alcohol, polyvinyl butyral, polyethylene glycol, urethane resin, acrylic resin, or melamine resin. The preferable examples of the solvent include: ethylene glycol monoalkyl ethers; ethylene glycol monoalkyl ether acetates; diethylene glycol dialkyl ethers; propylene glycol monoalkyl ethers; propylene glycol dialkyl ethers; propylene glycol alkyl ether acetates; lactate esters; aliphatic carboxylic acid esters; aromatic hydrocarbons; ketones; esters; and amides. The ethylene glycol monoalkyl ethers include: butyl acetate, ethyl 3-ethoxypropionate, ethylene glycol monomethyl ether, ethylene glycol monoethyl ether, ethylene glycol monopropyl ether, and ethylene glycol monobutyl ether. The ethylene glycol monoalkyl ether acetates include: ethylene glycol monomethyl ether acetate and ethylene glycol monoethyl ether acetate. The diethylene glycol dialkyl ethers include: diethylene glycol dimethyl ether, diethylene glycol diethyl ether, diethylene glycol dipropyl ether, and diethylene glycol dibutyl ether. The propylene glycol monoalkyl ethers include: propylene glycol monomethyl ether, propylene glycol monoethyl ether, propylene glycol monopropyl ether, and propylene glycol monobutyl ether. The propylene glycol dialkyl ethers include: propylene glycol dimethyl ether, propylene glycol diethyl ether, propylene glycol dipropyl ether, and propylene glycol dibutyl ether. The propylene glycol alkyl ether acetates include: propylene glycol monomethyl ether acetate, propylene glycol monoethyl ether acetate, propylene glycol monopropyl ether acetate, and propylene glycol monobutyl ether acetate. The lactate esters include: methyl lactate, ethyl lactate, and butyl lactate. The aliphatic carboxylic acid esters include: methyl formate, ethyl formate, amyl formate, methyl acetate, ethyl acetate, propyl acetate, isopropyl acetate, isobutyl acetate, amyl acetate, isoamyl acetate, hexyl acetate, methyl propionate, ethyl propionate, butyl propionate, methyl butanoate (methyl butyrate), ethyl butanoate (ethyl butyrate), propyl butanoate (propyl butyrate), and isopropyl butanoate (isopropyl butyrate). The aromatic hydrocarbons include toluene and xylene. The ketones include methyl ethyl ketone, 2-heptanone, 3-heptanone, 4-heptanone, and cyclohexanone. The esters include: ethyl 2-hydroxypropionate, ethyl 2-hydroxy-2-methylpropionate, ethoxyethyl acetate, hydroxy ethyl acetate, methyl 2-hydroxy-3-methylbutyrate, methyl 3-methoxy propionate, ethyl 3-methoxy propionate, 3-methoxybutyl acetate, 3-methyl-3-methoxybutyl acetate, 3-methyl-3-methoxybutyl propionate, 3-methyl-3-methoxybutyl butyrate, methyl acetoacetate, ethyl acetoacetate, methyl pyruvate, and ethyl pyruvate. The amides include: N-methylpyrrolidone, N,N-dimethylformamide, N-methylformamide, and N,N-dimethylacetamide. These solvents may be used alone or in combination of two or more.

The content of the resin or the solvent in the glass paste composition may be adjusted in such a manner that the plasticity, fluidity, and viscosity can be suitable for its formation or application. The glass paste composition may contain various additives as optional components. Examples of such additives include a surfactant, a development accelerator, an adhesion aid, an antihalation agent, a preservative stabilizer, a deforming agent, an antioxidant, an ultraviolet absorber, low-melting-point glass, a pigment, and a dye.

The softening point of seal layer 19 used is set 30°C through 70°C lower than the sealing temperature at which front panel 2 and rear panel 9 are heated while being aligned with each other and fixed to each other in order to seal the glass substrates to each other at their periphery using seal layer 19 in the sealing step.

The softening point is measured using a macro differential thermal analyzer and defined as a second endothermic peak temperature. When the difference between the softening point and the sealing temperature is less than 30°C, the "gap" is caused in sealing portion 18 even at the sealing temperature. This causes crosstalk or lighting failure, making the PDP have display defects.

On the other hand, when the difference between the softening point and the sealing temperature is larger than 70°C, seal layer 19 is likely to be softened when heated in a high vacuum in the evacuation step following the sealing step. As a result, the softened seal layer 19 is pulled into image display area 17 so as to swell image display area 17, thereby causing lighting failure or increasing the lighting voltage in and around sealing portion 18.

Six different types of sealing material each having a predetermined softening point are produced according to the aforementioned conditions as follows. First, low-melting-point glass powder is prepared using Bi₂O₃, MgO, ZnO, B₂O₃, SiO₂, CeO, CaO, SrO, BaO, Al₂O₃, Li₂O, Na₂O, and K₂O, which are mixed in a predetermined compounding ratio. The resulting mixture is melted for one hour in an electric furnace of 1100°C through 1200°C using a platinum crucible. The molten glass is pressed using a brass plate so as to be quenched to form cullet. Then, the cullet is subjected to a twin roller technique to form glass cullet and pulverized using a ball mill so as to form the low-melting-point glass powder. The low-melting-point glass powder is mixed with a commercially available cordierite to adjust the coefficient of thermal expansion, thereby completing the sealing material. The softening points of the six types of sealing material thus prepared are shown in Table 1 below.

**Table 1**

| sample number | melting point (°C) |
|---|---|
| 1 | 397 |
| 2 | 402 |
| 3 | 410 |
| 4 | 427 |
| 5 | 438 |
| 6 | 444 |

The six types of sealing material are each mixed with a binder and an organic vehicle including a solvent so as to prepare sealing material pastes. The organic vehicle is made by dissolving 1.2 parts of nitrocellulose in acetate isoamyl. The vehicle is mixed with the sealing material in a weight ratio of 6. 5 : 1 so as to make the viscosity 10,000 cP.

The preparation of front panels 2 are described as follows with reference to Fig. 1. Front glass substrates 3 are 42 inch insulating glass substrates having six different thicknesses of 0.3 mm, 0.6 mm, 1.2 mm, 1.5 mm, 1.8 mm, and 2.8 mm. On each front glass substrate 3 are formed ITO-based transparent electrodes 4a and 5a in a predetermined pattern. Then, silver paste made of a mixture of silver powder and an organic vehicle is applied in the form of a plurality of lines, and the glass substrate is sintered to form bus electrodes 4b and 5b. On these display electrodes 6 are applied a dielectric glass paste made of a mixture of dielectric glass powder and an organic vehicle by blade coating, dried and sintered so as to form dielectric layer 7. Then, on dielectric layer 7 is formed magnesium oxide (MgO) by electron beam deposition and sintered so as to form protective layer 8. As a result, front panels 2 are complete.

The production of rear panels 9 are described as follows with reference to Fig. 1. Rear glass substrates 10 are 42 inch insulating glass substrates having six different thicknesses of 0.3 mm, 0.6 mm, 1.2 mm, 1.5 mm, 1.8 mm, and 2.8 mm. On each rear glass substrate 10 are formed silver-based address electrodes 11 in a stripe pattern by screen printing. Next, underlying dielectric layer 12 is formed in the same manner as dielectric layer 7 of front panel 2. Then, glass paste for barrier ribs is repeatedly applied to between the adjacent ones of the address electrodes by screen printing and sintered to form barrier ribs 13. Finally, red phosphor layers 14R, green phosphor layers 14G, and blue phosphor layers 14B are formed by screen printing on the sides of barrier ribs 13 and on the surface of underlying dielectric layer 12 exposed between barrier ribs 13, thereby completing rear panels 9.

One of the aforementioned sealing material pastes is applied using a dispenser to at least one of front panel 2 and rear panel 9 thus produced. The applied paste is calcinated at 410°C. After this, front panel 2 and rear panel 9 are combined with each other and sintered at 470°C for 20 minutes so as to be sealed to each other. The discharge spaces are evacuated to a high vacuum (about 1 × 10⁻⁴ Pa) at 400°C, and filled with a Ne-Xe discharge gas at a predetermined pressure so as to complete PDP 1.

Table 2 shows the measurement results of the maximum enlargement of gap measured in sealing portion 18 and an increase in the lighting voltage of each of PDPs 1 which are different in the softening point of the sealing material and the glass thickness.

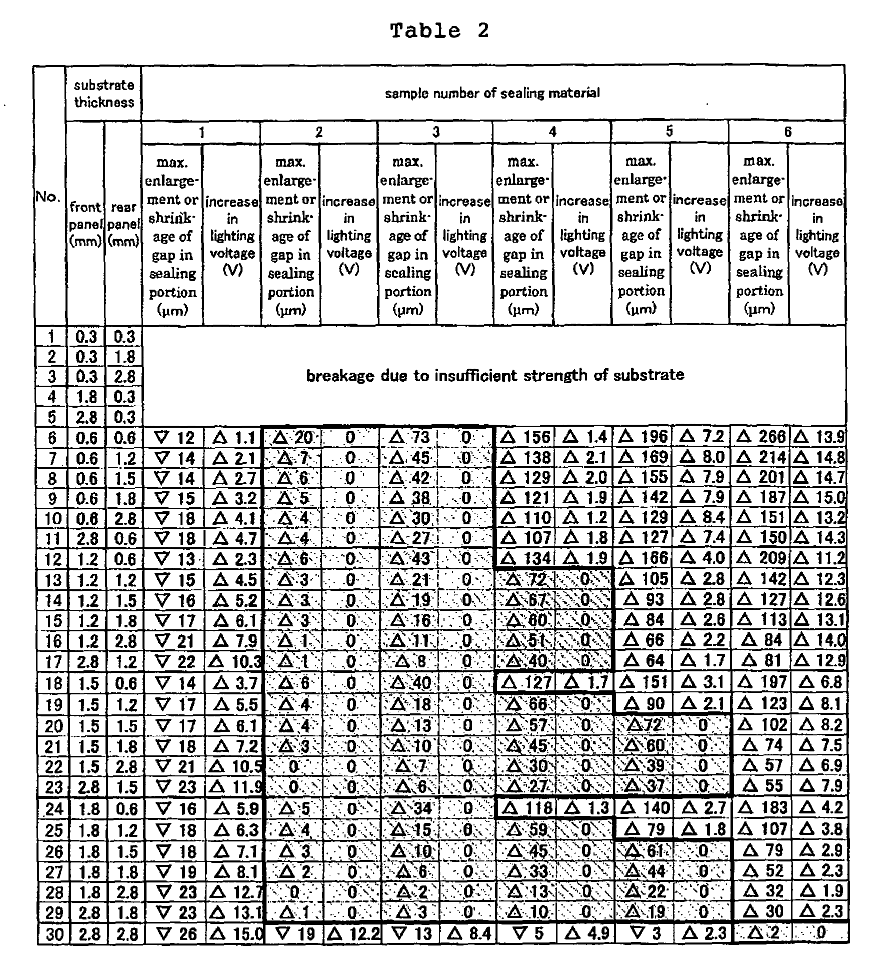

The maximum enlargement of gap of sealing portion 18 is measured as follows. First, the total thickness of front panel 2 and rear panel 9 including the thickness of seal layer 19 is measured using a micrometer. The measured value is compared with the total thickness in a portion which is inside image display area 17 and in which barrier ribs 13 are in contact with dielectric layer 7 or protective layer 8. When the total thickness including seal layer 19 is larger, that is, sealing portion 18 enlarges, the value is marked with "Δ". In contrast, when sealing portion 18 shrinks, the value is marked with "V".

In order to evaluate an increase in the lighting voltage, the increase in the voltage necessary for lighting compared with the average value of conventional PDPs is expressed as a numeric value. When there is no voltage increase, the value is shown as "0".

In image display area 17, if a gap is formed between barrier ribs 13 and front panel 2, charge interference called crosstalk is caused during the discharge between each pixel. Crosstalk makes it impossible to control the lighting of the panel or causes an increase in the lighting voltage. Note that in the actual operation, crosstalk affects the driving of PDP 1 only when the gap exceeds 5 µm and can be ignored when the gap is 5 µm or less. This means that in order to ensure a normal lighting condition, the enlargement of gap of front panel 2 from barrier ribs 13 in image display area 17 is required to be 5 µm or less. The aforementioned maximum enlargements of gap of sealing portion 18 are obtained when the enlargement of gap from barrier ribs 13 is 5 µm or less.

In Table 2, the PDPs of No.1 to 5 in which at least one of front and rear panels 2 and 9 has a 0.3 mm thick glass substrate are broken during their manufacture due to insufficient strength of the substrate, thereby making it impossible to complete the PDPs.

The PDPs of No.6 to 30, on the other hand, having the glass substrates enclosed by the bold line and the sealing material of No. 2 to 6 whose softening points are shown in Table 1 exhibit excellent lighting properties with no lighting voltage increase. In other words, a PDP with no lighting voltage increase can be manufactured

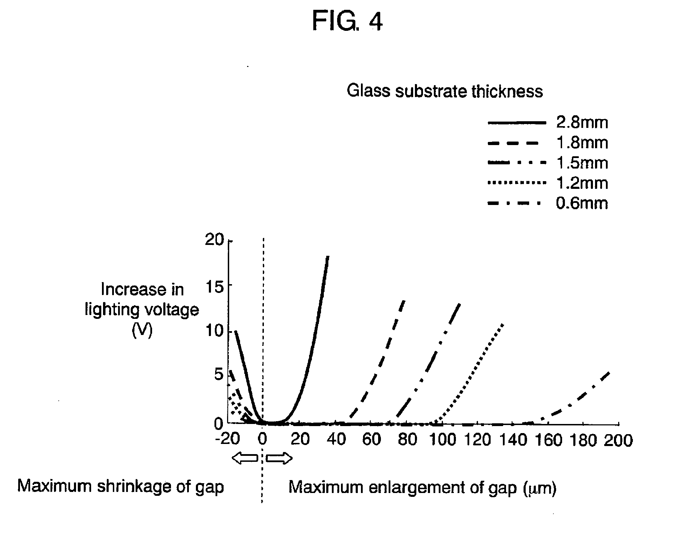

The reason for these results is likely to be due to the relationship between the thickness and the rigidity of the glass substrate. Fig. 4 is a graph showing an effect of the thickness of a glass substrate of the PDP according to the embodiment of the present invention. The graph shows the relationship between the maximum enlargement of gap (a negative value indicates the maximum shrinkage of gap) of sealing portion 18 and a lighting voltage increase in PDPs having glass substrates of different thicknesses. It turns out that the maximum enlargement of gap to achieve stable lighting is 150 µm when the thickness is 0.6 mm; 100 µm when the thickness is 1.2 mm; 75 µm when the thickness is 1.5 mm; 50 µm when the thickness is 1.8 mm; and 15 µm when the thickness is 2.8 mm.

As described hereinbefore, the present invention prevents an increase in the lighting voltage due to crosstalk, which is caused by the "gap" in the peripheral portion of the panels when a thin glass substrate is used.

The present invention also provides a sealing material having one of the aforementioned softening points by using a lead-free glass composition, thereby achieving a PDP having a small environmental load.

### INDUSTRIAL APPLICABILITY

As described hereinbefore, the PDP of the present invention causes little noise in a place with a low atmospheric pressure and provides excellent lighting to prevent crosstalk due to the "gap" in the peripheral portion of the image display area and also to prevent an increase in the lighting voltage. Thus, the PDP of the present invention is useful as a large-screen image display device.

## Claims

1. plasma display panel comprising:
a front panel (2) including:
a glass substrate (3),
a plurality of display electrodes (6) formed on the glass substrate,
a dielectric layer (7) coating the display electrodes,
a MgO layer (8) formed on the dielectric layer, and
a rear panel (9) including:
a glass substrate (10),
a plurality of address electrodes (11) formed on the glass substrate,
a dielectric layer (12) coating the address electrodes,
a barrier rib (13) formed on the underlying dielectric layer,
a phosphor layer (14R,14G,14B) provided on the surface of the underlying
dielectric layer and on the side surface of the barrier rib,
wherein the front panel (2) and the rear panel (9) are disposed opposite to each other so as to form an image display area (17) and an image non-display area, the image non-display area including a seal layer (19) in which the glass substrates are sealed at a periphery thereof by a sealing material,
wherein the sealing material is made of a mixture of cordierite and a low-melting-point glass composition which is Bi₂O₃-based,
**characterized in that**
the glass substrates are sealed at a sealing temperature of 470°C,
said sealing material having a softening temperature and said glass substrates having thicknesses chosen from the groups consisting of:
- front panel: 0.6mm to 2.8mm
rear panel: 0.6mm to 1.8mm
softening temperature: 402°C or 410°C
- front panel 0.6mm to 1.8mm
rear panel: 2.8mm
softening temperature: 402°C or 410°C
- front panel: 1.2mm to 2.8mm
rear panel: 1.2mm to 2.8mm
softening temperature: 427°C
- front panel: 1.5mm to 2.8mm
rear panel 1.5mm to 1.8mm
softening temperature: 438°C
- front panel: 2.8mm
rear panel: 2.8mm
softening temperature: 444°C.

## Patentansprüche

1. Plasma-Anzeigetafel mit:
einer Vorderseite (2), die Folgendes aufweist:
ein Glassubstrat (3);
eine Vielzahl von Anzeige-Elektroden (6), die auf dem Glassubstrat ausgebildet sind;
eine dielektrische Schicht (7), die die Anzeige-Elektroden bedeckt; und
eine MgO-Schicht (8), die auf der dielektrischen Schicht ausgebildet ist; und einer Rückseite (9), die Folgendes aufweist:
ein Glassubstrat (10);
eine Vielzahl von Adresselektroden (11), die auf dem Glassubstrat ausgebildet sind;
eine dielektrische Schicht (12), die die Adresselektroden bedeckt;
eine Sperrrippe (13), die auf der darunterliegenden dielektrischen Schicht ausgebildet ist; und
eine Phosphorschicht (14R, 14G, 14B), die auf der Oberfläche der darunterliegenden dielektrischen Schicht und auf der Seitenfläche der Sperrrippe ausgebildet ist,
wobei die Vorderseite (2) und die Rückseite (9) so einander gegenüberliegen, dass ein Bild-Anzeigebereich (17) und ein Bild-Nichtanzeigebereich entstehen, wobei der Bild-Nichtanzeigebereich eine Abdichtungsschicht (19) hat, an deren Peripherie die Glassubstrate mittels eines Abdichtungsmaterials abgedichtet sind, das aus einem Gemisch aus Cordierit und einer Glaszusammensetzung auf Bi₂O₃-Basis besteht, die einen niedrigen Schmelzpunkt hat, **dadurch gekennzeichnet, dass** die Glassubstrate bei einer Abdichtungstemperatur von 470 °C abgedichtet werden,
wobei das Abdichtungsmaterial eine Erweichungstemperatur hat und die Glassubstrate Dicken haben, die aus den folgenden Gruppen gewählt sind:
- Vorderseite: 0,6 mm bis 2,8 mm,
Rückseite: 0,6 mm bis 1,8 mm,
Erweichungstemperatur: 402°C oder 410 °C;
- Vorderseite: 0,6 mm bis 1,8 mm,
Rückseite: 2,8 mm,
Erweichungstemperatur: 402 °C oder 410°C;
- Vorderseite: 1,2 mm bis 2,8 mm,
Rückseite: 1,2 mm bis 2,8 mm,
Erweichungstemperatur: 427°C;
- Vorderseite: 1,5 mm bis 2,8 mm,
Rückseite: 1,5 mm bis 1,8 mm,
Erweichungstemperatur: 438 °C; und
- Vorderseite: 2,8 mm,
Rückseite: 2,8 mm,
Erweichungstemperatur: 444°C.

## Revendications

1. Panneau d'affichage à plasma comprenant :
un panneau avant (2) incluant :
un substrat de verre (3),
une pluralité d'électrodes d'affichage (6) formées sur le substrat de verre,
une couche diélectrique (7) revêtant les électrodes d'affichage,
une couche de MgO (8) formée sur la couche diélectrique, et
un panneau arrière (9) incluant :
un substrat de verre (10),
une pluralité d'électrodes d'adresse (11) formées sur le substrat de verre,
une couche diélectrique (12) revêtant les électrodes d'adresse,
une nervure barrière (13) formée sur la couche diélectrique sous-jacente,
une couche de luminophores (14R, 14G, 14B) prévue sur la surface de la couche diélectrique sous-jacente et sur la surface latérale de la nervure barrière,
dans lequel le panneau avant (2) et le panneau arrière (9) sont disposés à l'opposé l'un de l'autre de manière à former une zone d'affichage d'image (17) et une zone de non affichage d'image, la zone de non affichage d'image incluant une couche de scellage (19) dans laquelle les substrats de verre sont scellés au niveau d'une périphérie de ceux-ci par un matériau de scellage,
dans lequel le matériau de scellage est constitué d'un mélange de cordiérite et d'une composition de verre à bas point de fusion qui est à base de Bi₂O₃,
**caractérisé en ce que**
les substrats de verre sont scellés à une température de scellage de 470°C,
ledit matériau de scellage ayant une température de ramollissement et lesdits substrats de verre ayant des épaisseurs choisies parmi les groupes consistant en :
- panneau avant : 0,6 mm à 2,8 mm
panneau arrière : 0,6 mm à 1,8 mm
température de ramollissement : 402°C ou 410°C
- panneau avant : 0,6 mm à 1,8 mm
panneau arrière : 2,8 mm
température de ramollissement : 402°C ou 410°C
- panneau avant : 1,2 mm à 2,8 mm
panneau arrière : 1,2 mm à 2,8 mm température de ramollissement : 427°C
- panneau avant : 1,5 mm à 2,8 mm
panneau arrière : 1,5 mm à 1,8 mm
température de ramollissement : 438°C
- panneau avant : 2,8 mm
panneau arrière : 2,8 mm
température de ramollissement : 444°C
